# FASCICULE DE BREVET EUROPEEN

(11) **EP 0 429 320 B1**
(45) Date de publication et mention de la délivrance du brevet: **07.09.1994**
(21) Numéro de dépôt: 90403030.1
(22) Date de dépôt: 26.10.1990
(51) Int. Cl.: F41A 25/06, F16F 7/12

(54) **Système d'arme perfectionné muni d'un dispositif d'amortissement**
Waffe mit Rückstossbremse
Weapon with recoil buffer

(30) Priorité: 30.10.1989 FR 8914210; 27.08.1990 FR 9010684
(43) Date de publication de la demande: 29.05.1991
(73) Titulaire: ETIENNE LACROIX - TOUS ARTIFICES SA, F-31600 Muret (FR)
(72) Inventeur: Leau, Philippe, F-31300 Toulouse (FR); Tustes, Hervé, F-31270 Frouzins (FR)
(74) Mandataire: Schrimpf, Robert

(56) Documents cités:
- DE-A- 2 154 991
- DE-A- 2 258 063
- DE-C- 448 652
- FR-A- 1 035 971
- US-A- 3 105 411
- US-A- 3 387 538
- US-A- 3 428 150
- US-A- 3 501 997
- US-A- 3 637 051

## Description

La présente invention concerne un système d'arme. Elle trouve en particulier application aux systèmes d'arme pour tir à l'épaule, notamment mais non exclusivement un système d'arme anti-char. Elle peut également trouver application dans le domaine de l'artillerie ou des armes de l'infanterie légère.

La présente invention a pour but de proposer un système d'arme conçu pour écrêter l'effort provoqué par l'éjection d'un projectile ou missile hors d'un système d'arme, qu'il soit à mortier fermé ou ouvert.

La présente invention a en particulier pour but de perfectionner les systèmes décrits dans les documents FR-A-2625800 et FR-A-2644571.

On se reportera utilement à ces deux documents pour la bonne compréhension de la présente invention.

Le contenu de ces deux documents antérieurs doit d'ailleurs être considéré comme intégré à la présente description, par la référence qui leur est faite ici.

On rappelle que le document FR-A-2625800 décrit entre autres une arme d'épaule à usage de lance-roquette comportant au moins un tube d'arme, un fût équipé de moyens formant crosse et poignée et de moyens de commande de tir, ainsi que des moyens de sollicitation élastique longitudinale du tube d'arme vers l'avant, intercalés entre le tube d'arme et le fût. Selon le document FR-A-2625800 les moyens de sollicitation élastique comprennent principalement un ressort hélicoïdal.

Par ailleurs le document FR-A-2644571 décrit un système d'arme comprenant un tube d'arme et une référence fixe, le tube d'arme étant guidé à coulissement par rapport à la référence fixe et au moins un dispositif d'amortissement intercalé entre le tube d'arme et la référence fixe. Selon cette demande de brevet, il est prévu de préférence plusieurs étages d'amortissement montés en cascade. De façon avantageuse, chaque étage d'amortissement comprend plusieurs vérins amortisseurs.

Le document US-A-3387538 décrit un système d'arme comprenant un amortisseur formé d'un ressort spiral, ce document formant une base pour le préambule de la revendication 1.

Le document US-A-3105411 décrit un système d'arme comprenant un dispositif amortisseur comportant une masse de produit pulvérulant placé dans un boîtier élastique déformable et recevant un piston apte à provoquer un écoulement de la masse de produit pulvérulant lorsque ledit piston pénètre dans le boîtier.

Le document DE-A-2154991 décrit un amortisseur pour véhicule automobile comprenant également un boîtier recevant un produit pulvérulant ou équivalent et un piston apte à déplacer le produit pulvérulant lorsqu'il est lui-même sollicité en mouvement par rapport au boîtier.

Le document US-A-3637051 décrit un système absorbeur d'énergie créée par un impact. Plus précisément, ce dispositif enseigne un système absorbeur d'énergie qui comporte deux couches de billes en matériau fracturable entourant la charge à protéger. Le document préconise d'adapter les billes pour éviter leur déformation avant rupture.

Les buts précités sont atteints selon la présente invention grâce à un système d'arme du type connu en soi comprenant un tube d'arme et une référence fixe, pouvant être une épaulière ou des poignées pour un tir à l'épaule, ou un affût dans les autres cas, le tube d'arme étant guidé à coulissement par rapport à la référence fixe et au moins un dispositif d'amortissement intercalé fonctionnellement entre le tube d'arme et la référence fixe, lequel dispositif d'amortissement comprend au moins une structure déformable conçue pour absorber au moins une partie importante de l'énergie mécanique de recul du tube d'arme lors de l'éjection d'un projectile ou missile, en transformant cette énergie mécanique au moins en partie en énergie calorifique, caractérisé par le fait que le dispositif d'amortissement comprend un boitier logeant des billes creuses en matériau déformable, lié à l'un du tube d'arme et de la référence fixe, et un piston de section inférieure au boitier, lié à l'autre de la référence fixe et du tube d'arme, centré sur le boitier et guidé à translation par rapport à celui-ci, en regard des billes, pour déformer celles-ci par écrasement, lors d'un tir lorsque le piston pénètre dans la masse des billes.

La demanderesse a déterminé que les dispositifs d'amortissement répondant à la définition ci-dessus, permettent d'écrêter l'effort provoqué par l'éjection d'un projectile ou missile, de diminuer l'énergie mécanique transmise à la référence fixe et d'en retarder son application de façon beaucoup plus efficace qu'un simple ressort hélicoïdal.

En poursuivant ses études et expérimentations, la Demanderesse a précisé qu'il était avantageux d'adapter le dispositif d'amortissement pour limiter l'effort appliqué à la référence fixe à un seuil maximal déterminé.

Plus précisément, le dispositif d'amortissement est avantageusement conçu selon la présente invention pour transformer l'effort de forte amplitude et durée relativement courte appliqué au tube d'arme, lors de l'éjection d'un projectile ou missile, en un palier d'effort appliqué sur la référence fixe d'amplitude inférieure, au plus égale audit seuil et de durée supérieure.

Plus précisément encore, dans le cas d'un système portatif, où la référence fixe est consituée par un tireur, le dispositif d'amortissement conforme à la présente invention est de préférence conçu pour transformer l'effort de forte amplitude et durée relativement courte appliqué au tube d'arme, lors de l'éjection d'un projectile ou missile, en un palier d'effort appliqué sur la référence fixe, d'amplitude au plus égale à 12 000 N et de durée inférieure à 0,2 sec.

La Demanderesse a conduit des expérimentations poussées sur les structures à base de billes creuses.

Certaines des caractéristiques relevées au cours de ces expérimentations apparaîtront sur les dessins annexés.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente différentes courbes obtenues par mesure sur un système d'arme dépourvu d'amortisseur, au cours d'une phase d'étalonnage,
- la figure 2 représente des courbes similaires obtenues sur un système d'arme muni d'un amortisseur à base de mousse de polyuréthane peu dure,
- la figure 3 représente des courbes similaires obtenues sur un système d'arme muni d'un amortisseur à base de mousse de polyuréthane dure,
- la figure 4 représente des courbes similaires obtenues sur un système d'arme muni d'un amortisseur à billes creuses conformes à la présente invention,
- la figure 5 représente schématiquement un amortisseur à billes creuses conformes à la présente invention, avant utilisation,
- la figure 6 représente le même amortisseur après utilisation, et
- la figure 7 représente une variante de réalisation d'un amortisseur conforme à la présente invention.

De préférence les structures d'amortissement déformables conformes à la présente invention sont réalisées à base d'aluminium, d'acier, de matière plastique, ou de matériau composite.

Il peut être prévu plusieurs étages d'amortissement comme enseigné dans le principe dans le document FR-A-2644571. Par ailleurs, le dispositif d'amortissement conforme à la présente invention peut équiper des systèmes d'arme monocoup ou multicoups.

Selon la présente invention, le dispositif d'amortissement comprend des billes creuses en aluminium, acier, matière plastique, matériau composite ou équivalent.

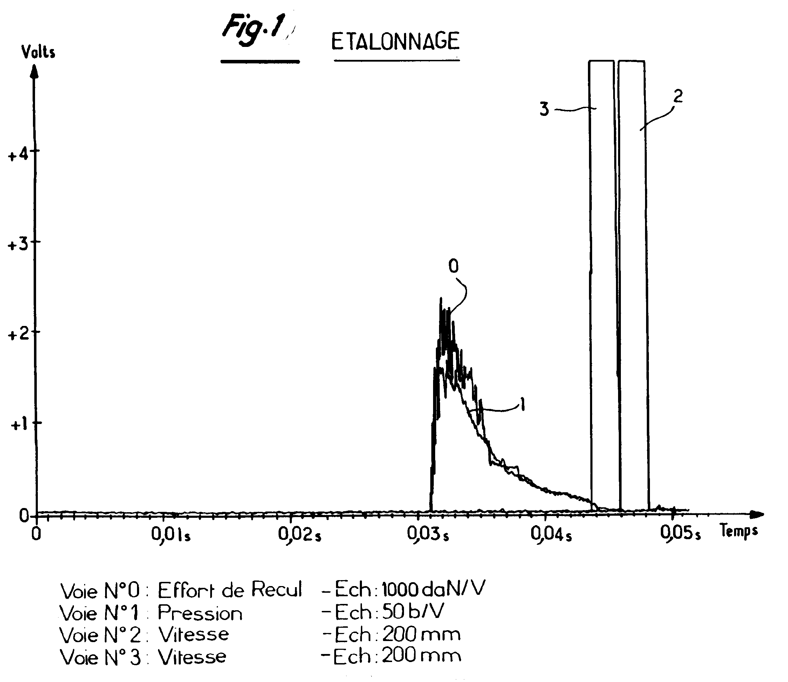

Les courbes illustrées sur les figures 1 à 4 ont été relevées lors de tirs expérimentaux aux mortiers de calibre 60 mm, d'une masse totale de l'ordre de 4,2 kg, et un projectile d'une masse de l'ordre de 1,3 kg.

Les courbes relevées sont les suivantes :
. Voie n° 0 : Effort de Recul sur la référence fixe (mortier) mesuré à l'aide d'un capteur d'effort piezo-électrique,
. Voie n° 1 : Pression à l'intérieur du tube d'arme,
. Voies n° 2 et n°3 : obturation par le projectile des faisceaux générés par deux diodes laser espacées de 200mm à la sortie du tube d'arme.

Les créneaux 2 et 3 des figures permettent de mesurer la vitesse du projectile par mesure de la durée de chaque créneau connaissant la longueur du projectile ou par mesure de l'écart entre les deux créneaux.

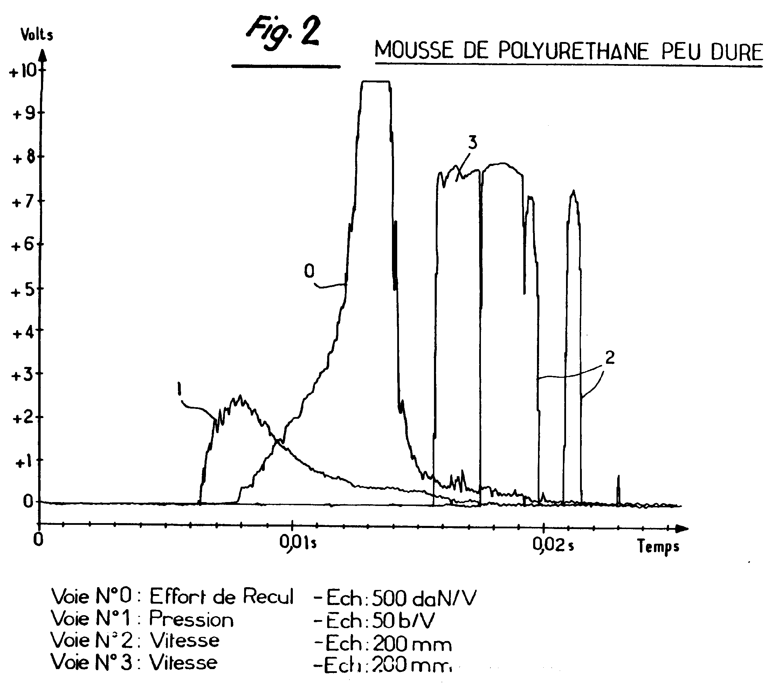

Les vitesses mesurées de sortie des projectiles étaient les suivantes : phase d'étalonnage (fig. 1) : 139 m/s, phases de test avec amortisseur (Fig. 2, 3 et 4) : 100 m/s.

On retrouve sur la Voie n° 0 de la figure 1 la transmission intégrale et instantanée, à la référence fixe, de l'effort de recul, lorsque le système n'est pas équipé d'amortisseur.

La Demanderesse a fait des essais à l'aide d'amortisseurs à base d'élastomère, tels que les produits commercialisés sous les marques Vibtène et Courbhane et sur des mousses de polyuréthane, par exemple sous forme de blocs ou d'empilements de rondelles.

Ces essais n'ont pas donné satisfaction.

Ces essais, réalisés par exemple avec des mousses de polyuréthane peu dures, n'ont pas permis d'amortir l'effort de recul comme montré par la figure 2 ; l'énergie est en effet restituée lorsque la mousse reprend sa position initiale.

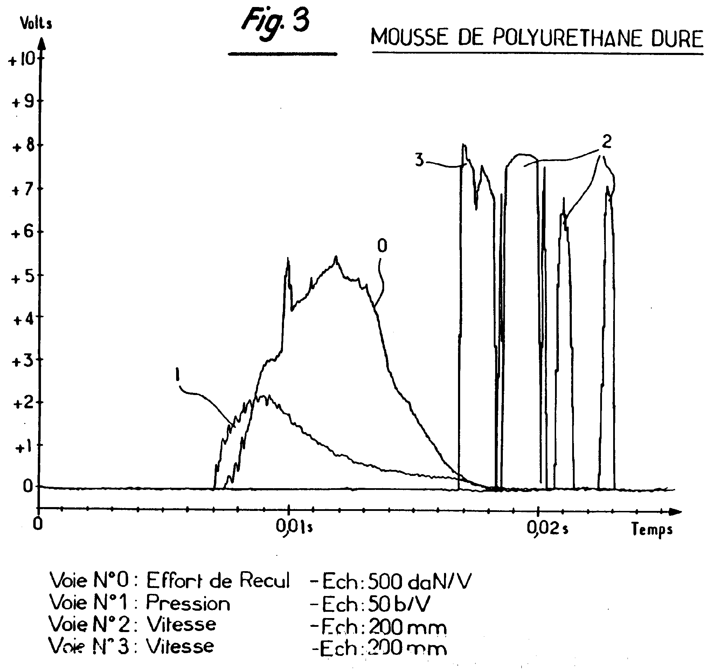

Les essais réalisés avec des mousses de polyuréthane plus dures ont permis un amortissement supérieur comme représenté sur la figure 3. Toutefois, l'amortissement obtenu n'est pas totalement satisfaisant. L'effort de recul amorti mesuré sur la référence fixe est de 27500 N, soit seulement un amortissement de 14 % de l'effort maximum de recul.

La Demanderesse a fait également différents essais sur des amortisseurs à billes creuses.

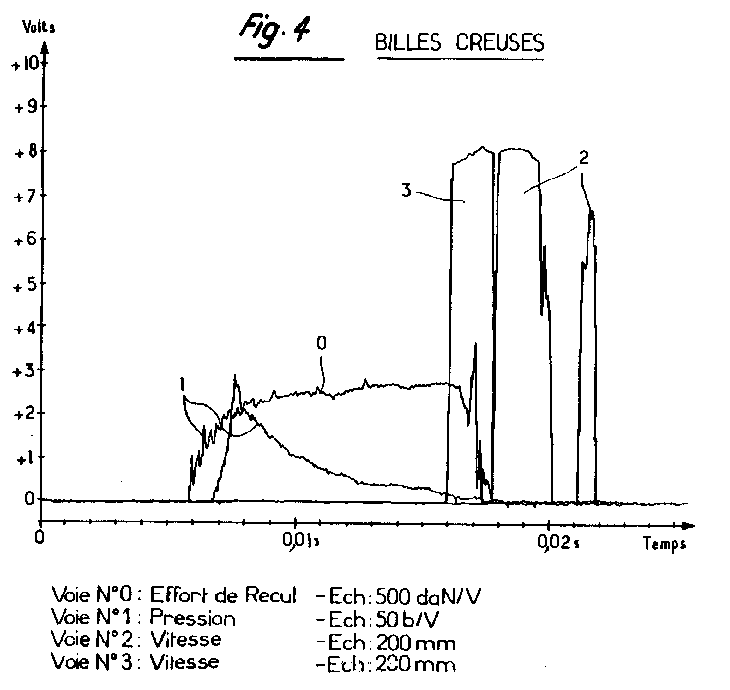

Elle a finalement obtenu une solution satisfaisante correspondant aux relevés de la figure 4, à l'aide de billes creuses métalliques, plus précisément à base de nickel et plus précisément encore de billes creuses de diamètre : 5 mm, épaisseur de paroi 80 µm et une densité de 0,82.

Les caractéristiques mécaniques de ces billes sont les suivantes :
- 0,5 mm de déformation sous une charge de 10,8 kg,
- 1 mm de déformation sous une charge de 22,2 kg,
- charge de rupture : 38 kg.

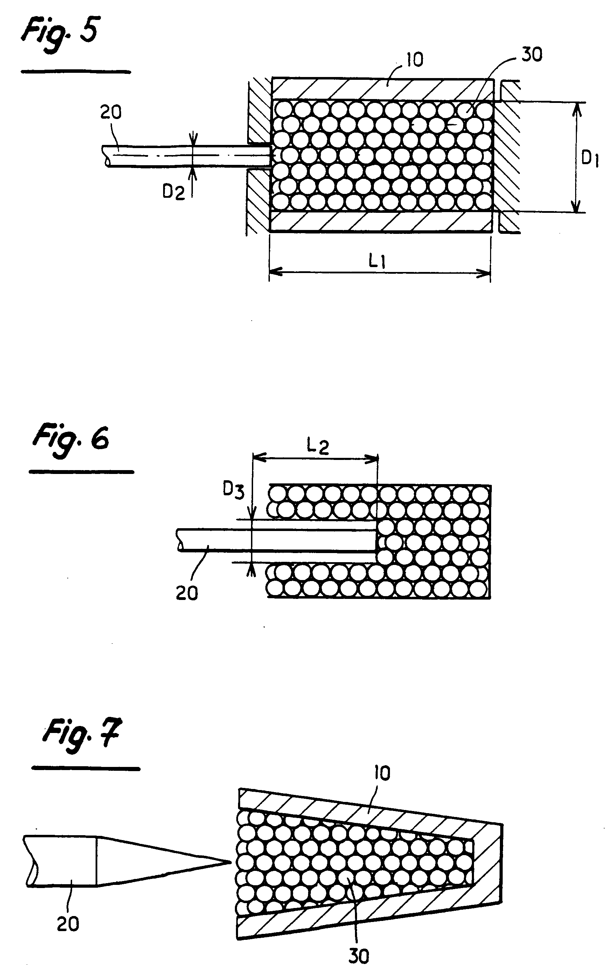

Les courbes de la figure 4 ont été mesurées sur un amortisseur du type représenté sur la figure 5 comprenant un boîtier cylindrique 10, de longueur L1 = 209 mm, de diamètre interne D1 = 60,5 mm rempli d'une masse 30 de 377,2 g des billes creuses précitées, soit une densité de 0,6 et un piston cylindrique 20 guidé à translation et centré sur le boîtier 10, et d'un diamètre D2 de 25 mm.

Lors des essais, le boîtier 10 était fixé sur la référence fixe, tandis que le piston 20 était fixé sur le tube d'arme. Cependant la disposition inverse peut être retenue.

L'amortisseur obtenu après sortie du projectile est illustré schématiquement sur la figure 6. Le piston 20 avait pénétré de L2 = 80 mm dans la masse de billes creuses et le diamètre D3 de l'évidement produit dans la masse de billes 30 était de 28 mm, soit supérieur au diamètre du piston 20, en raison de l'écrasement des billes. Le piston avait ainsi écrasé 16 rangées de billes.

Le cas échéant, comme représenté sur la figure 7, le piston et/ou le boîtier 10 peut (peuvent) être effilé(s), par exemple conique(s) pour améliorer l'effet d'amortissement grâce à la génération d'une composante radiale d'effort.

Les billes creuses peuvent être fabriquées selon toutes techniques connues de l'homme de l'art.

Les billes creuses peuvent par exemple être réalisées en déposant, sur des noyaux en matière soluble dans un solvant, un revêtement de nickel poreux puis en disposant les noyaux ainsi revêtus dans un solvant jusqu'à dissolution des noyaux, comme indiqué par exemple dans le document FR-A-2585373.

Les billes creuses peuvent être ensuite liées entre elles, à l'aide d'une résine, telle qu'une résine epoxy.

Bien entendu, la présente invention n'est pas limitée aux modes de réalisation qui viennent d'être décrits, mais s'étend à toutes variantes conformes à son esprit.

En particulier le diamètre des billes, leur épaisseur, leur rangement, ordonné ou en vrac, la nature du métal utilisé, la forme du corps contenant les billes, la forme du piston, la nature de la résine de liaison des billes peuvent différer des indications précitées.

Les billes creuses peuvent être vides ou remplies d'un matériau secondaire, par exemple de la mousse.

Les billes formant les différentes couches de l'amortisseur peuvent être différentes dans leur nature ou dimensions d'une couche à l'autre.

Dans le cadre de la présente demande, l'expression "tube d'arme" doit être comprise comme englobant tout élément guidé à coulissement par rapport à la référence fixe. Il peut s'agir par exemple d'un corps de cartouche ou projectile lui-même. Dans ce cas, le dispositif d'amortissement est intercalé entre la cartouche ou le projectile, et le lanceur formant référence fixe du système d'arme.

## Revendications

1. Système d'arme comprenant un tube d'arme et une référence fixe, le tube d'arme étant guidé à coulissement par rapport à la référence fixe et au moins un dispositif d'amortissement intercalé fonctionnellement entre le tube d'arme et la référence fixe, lequel dispositif d'amortissement comprend au moins une structure déformable conçue pour absorber au moins une partie importante de l'énergie mécanique de recul du tube d'arme lors de l'éjection d'un projectile ou missile, en transformant cette énergie mécanique au moins en partie en énergie calorifique caractérisé par le fait que le dispositif d'amortissement comprend un boitier (10) logeant des billes creuses (30) en matériau déformable, lié à l'un du tube d'arme et de la référence fixe, et un piston (20) de section inférieure au boitier (10), lié à l'autre de la référence fixe et du tube d'arme, centré sur le boitier (10) et guidé à translation par rapport à celui-ci, en regard des billes (30) pour déformer celles-ci par écrasement, lors d'un tir lorsque le piston (20) pénètre dans la masse des billes.

2. Système selon la revendication 1, caractérisé par le fait que les billes creuses (30) sont en nickel.

3. Système selon l'une des revendications 1 ou 2, caractérisé par le fait que les billes creuses (30) ont un diamètre de l'ordre de 5 mm.

4. Système selon l'une des revendications 1 à 3, caractérisé par le fait que l'épaisseur des parois des billes creuses (30) est de l'ordre de 80 µm.

5. Système selon l'une des revendications 1 à 4, caractérisé par le fait que les billes creuses (30) sont placées dans un boîtier (10) cylindrique associé à un piston cylindrique (20).

6. Système selon l'une des revendications 1 à 5, caractérisé par le fait que les billes creuses (30) sont placées dans un boîtier (10) associé à un piston conique (20).

7. Système selon l'une des revendications 1 à 6, caractérisé par le fait que le piston (20) est cylindrique.

8. Système selon l'une des revendications 1 à 6, caractérisé par le fait que le piston (20) est conique.

## Patentansprüche

1. Waffensystem mit einem Waffenrohr und einer festen Bezugseinrichtung, wobei das Waffenrohr verschiebbar bezüglich der festen Bezugseinrichtung geführt ist und wenigstens eine Dämpfungseinrichtung funktionell zwischen dem Waffenrohr und der festen Bezugseinrichtung angeordnet ist, welche Dämpfungseinrichtung wenigstens eine verformbare Einrichtung umfaßt, die so ausgebildet ist, daß sie wenigstens einen wesentlichen Teil der mechanischen Rückstoßenergie des Waffenrohres beim Ausstoßen eines Projektils oder eines Flugkörpers dadurch absorbiert, daß sie diese mechanische Energie wenigstens teilweise in Wärmeenergie umwandelt, dadurch gekennzeichnet, daß die Dämpfungseinrichtung ein Gehäuse (10), in dem Hohlkugeln (30) aus einem verformbaren Material aufgenommen sind und das mit dem Waffenrohr oder der festen Bezugseinrichtung verbunden ist, und einen Kolben (20) mit einem kleineren Querschnitt als dem des Gehäuses (10) umfaßt, der mit der jeweils anderen Einrichtung, nämlich der festen Bezugseinrichtung oder dem Waffenrohr verbunden ist, am Gehäuse (10) zentriert ist und diesbezüglich hinsichtlich der Kugeln (30) verschiebbar geführt ist, um diese durch Zusammendrücken bei einem Abschuß zu verformen, wenn der Kolben (20) in die Masse der Kugeln eindringt.

2. System nach Anspruch 1, dadurch gekennzeichnet, daß die Hohlkugeln (30) aus Nickel bestehen.

3. System nach einem der Ansprüche 1 oder 2, dadurch gekennzeichnet, daß die Hohlkugeln (30) einen Durchmesser in der Größenordnung von 5 mm haben.

4. System nach einem der Ansprüche 1 bis 3, dadurch gekennzeichnet, daß die Stärke der Wände der Hohlkugeln (30) in der Größenordnung von 80 µm liegt.

5. System nach einem der Ansprüche 1 bis 4, dadurch gekennzeichnet, daß die Hohlkugeln (30) in einem zylindrischen Gehäuse (10) angeordnet sind, dem ein zylindrischer Kolben (20) zugeordnet ist.

6. System nach einem der Ansprüche 1 bis 5, dadurch gekennzeichnet, daß die Hohlkugeln (30) in einem Gehäuse (10) angeordnet sind, dem ein konischer Kolben (20) zugeordnet ist.

7. System nach einem der Ansprüche 1 bis 6, dadurch gekennzeichnet, daß der Kolben (20) zylindrisch ist.

8. System nach einem der Ansprüche 1 bis 6, dadurch gekennzeichnet, daß der Kolben (20) konisch ist.

## Claims

1. A weapon system comprising a weapon tube and a stationary reference, the weapon tube being slidably guided relative to the stationary reference, and at least one shock absorber device being functionally interposed between the weapon tube and the stationary reference, which shock absorber device comprises at least one deformable structure designed to absorb at least a significant part of the mechanical recoil energy of the weapon tube during ejection of a projectile or a missile, transforming at least part of said mechanical energy into heat energy, the weapon system being characterized by the fact that the shock absorber device comprises a housing (10) containing the hollow balls (30) made of a deformable material, linked to one of the weapon tube and the stationary reference, and a piston (20) of smaller section to the housing (10), linked to the other of said stationary reference and weapon tube, centered on the housing (10) and guided in translation relative thereto, against the balls (30), in order to deform them by crushing on firing when the piston (20) penetrates the mass of balls.

2. A system according to claim 1, characterized by the fact that the hollow balls (30) are made of nickel.

3. A system according to claim 1 or 2, characterized by the fact that the hollow balls (30) have a diameter of about 5 mm.

4. A system according to any one of claims 1 to 3, characterized by the fact that the wall thickness of the hollow balls (30) is about 80 µm.

5. A system according to any one of claims 1 to 4, characterized by the fact that the hollow balls (30) are placed in a cylindrical housing (10) associated with a cylindrical piston (20).

6. A system according to any one of claims 1 to 5, characterized by the fact that the hollow balls (30) are placed in a housing (10) associated with a conical piston (20).

7. A system according to any one of claims 1 to 6, characterized by the fact that the piston (20) is cylindrical.

8. A system according to any one of claims 1 to 6, characterized by the fact that the piston (20) is conical.
